# FASCICULE DE BREVET EUROPEEN

(11) **EP 3 663 472 B1**
(45) Date de publication et mention de la délivrance du brevet: **18.10.2023**
(21) Numéro de dépôt: 19214019.2
(22) Date de dépôt: 06.12.2019
(51) Int. Cl.: E03C 1/298, E03F 5/04, E03F 5/042, F16K 15/14

(54) **BLOC ANTI-RETOUR POUR SIPHON DE BAC DE DOUCHE ET SIPHON ÉQUIPÉ D'UN TEL BLOC ANTI-RETOUR**
RÜCKLAUFSPERRE FÜR SIPHON EINER DUSCHWANNE, UND SIPHON, DER MIT EINER SOLCHEN RÜCKLAUFSPERRE AUSGESTATTET IST
CHECK BLOCK FOR SHOWER TRAY SIPHON AND SIPHON EQUIPPED WITH SUCH A CHECK BLOCK

(30) Priorité: 07.12.2018 FR 1872481
(43) Date de publication de la demande: 10.06.2020
(73) Titulaire: Wirquin Plastiques, 44470 Carquefou (FR)
(72) Inventeur: Le Coent, Daniel, 44470 Carquefou (FR); Bacouet, Alban, 44980 Sainte Luce sur Loire (FR)
(74) Mandataire: Lequien, Philippe

(56) Documents cités:
- GB-A- 2 449 364
- KR-A- 20120 132 024
- US-A1- 2014 373 931

## Description

Le domaine de l'invention est celui de la conception et de la fabrication d'équipements sanitaires, hydrauliques en général, et en particulier d'équipements pour l'évacuation d'eau.

Plus précisément, l'invention concerne un siphon pour bac de douche, le siphon comprenant un bloc anti-retour monté dans le siphon pour permettre l'évacuation de l'eau tout en empêchant la remontée de mauvaises odeurs depuis les canalisations lorsque toute l'eau a été évacuée.

On connait de tels blocs qui comprennent une paire de membranes mobiles entre une position de passage dans laquelle les membranes sont écartées l'une de l'autre pour autoriser une évacuation d'eau, et une position d'obturation dans laquelle les membranes sont au contact l'une de l'autre pour empêcher la remontée de mauvaises odeurs depuis les canalisations.

Plus particulièrement, chaque membrane comprend une première portion inclinée, formant ensemble une sorte d'entonnoir, suivie d'une deuxième portion droite, les portions droites étant au contact l'une de l'autre dans la position d'obturation de la paire de membranes.

L'eau à évacuer du bac de douche exerce une pression sur les premières portions inclinées de sorte à les positionner sensiblement droites, c'est-à-dire parallèles aux deuxièmes portions, et à autoriser l'évacuation de l'eau par écartement des deux deuxièmes portions l'une par rapport à l'autre.

En l'absence d'eau à évacuer, et donc de la force qu'elle exerce, les premières portions inclinées recouvrent leur position initiale de sorte que les deuxièmes portions soient au contact l'une de l'autre, empêchant ainsi toute remontée de mauvaises odeurs depuis les canalisations.

Si un tel bloc anti-retour donne satisfaction, il n'est pas sans inconvénient.

En effet, lors de l'insertion du bloc dans un siphon, les membranes viennent au contact des parois du siphon et peuvent s'abîmer au risque de ne plus assurer l'obturation et donc de laisser les mauvaises odeurs remonter des canalisations.

Par ailleurs, un tel bloc étant réalisé dans un matériau élastiquement déformable, tel qu'un élastomère, il est possible que le bloc soit désaxé lorsqu'il est introduit dans le siphon. Le matériau élastiquement déformable assurera alors une tenue du bloc dans le siphon mais laissera des espaces entre le bloc et les parois
du siphon, espaces par lesquels les mauvaises odeurs peuvent remonter dans le bac de douche et donc dans la salle d'eau ou salle de bain.

En outre, un désaxement ou mauvais positionnement peut engendrer un écartement permanent des membranes, laissant ainsi passer les mauvaises odeurs.

Enfin, il est fréquent que des blocs présentent des défauts de fabrication, par exemple une excroissance de matière. De telles excroissances peuvent par exemple être dues à une carotte liée à l'injection de matière thermoplastique.

Toutefois, le matériau élastiquement déformable n'empêche pas le montage du bloc dans le siphon mais crée des voies de passage pour les mauvaises odeurs.

Un autre bloc anti-retour connu comprend un système de clapet monté pivotant par rapport au corps au moyen d'une charnière. Une telle charnière comprend généralement un axe (pièce mâle) et des moyens d'accroche (pièces femelles) solidaires du clapet, les moyens d'accroche étant destinés à être montés à rotation sur l'axe.

Cette charnière présente comme inconvénient majeur une étanchéité limitée. En effet, les moyens d'accroche solidaires du clapet sont écartés les uns des autres pour créer un jeu de fonctionnement. Ce jeu de fonctionnement crée ainsi un passage d'air par lequel l'air provenant des canalisations et chargé de mauvaises odeurs peut s'engouffrer et remonter jusque dans l'équipement sanitaire.

Il est également connu de l'art antérieur concernant le domaine technique des équipements sanitaires les documents de brevets publiés sous les numéros US 2014/373931 , GB 2 449 364, et KR 2012 013 202.

L'invention a notamment pour objectif de palier les inconvénients de l'art antérieur.

Plus précisément, l'invention a pour objectif de proposer un siphon qui assure un blocage des mauvaises odeurs en toutes circonstances.

L'invention a également pour objectif de fournir un tel siphon qui facilite et fiabilise son installation.

L'invention a en outre pour objectif de fournir un siphon le bloc duquel soit simple de retrait, notamment pour sa maintenance.

Ces objectifs, ainsi que d'autres qui apparaîtront par la suite, sont atteints grâce à l'invention qui a pour objet un siphon selon les termes de la revendication 1.

L'utilisation d'une cartouche rigide assure un bon positionnement du bloc anti-retour dans le siphon. En effet, la rigidité de la cartouche évite que celle-ci ne se déforme lors de son insertion dans le siphon, une telle déformation créant les passages permettant la remontée de mauvaises odeurs comme dans l'art antérieur.

Par ailleurs, la rigidité de la cartouche permet d'assurer un contrôle visuel du bon positionnement du bloc anti-retour dans le siphon.

Enfin, le clapet ne peut pas être abîmé lors de l'insertion du bloc anti-retour dans le siphon puisqu'il est monté à rotation sur la cartouche. Ainsi, lors de l'insertion du bloc anti-retour dans le siphon, c'est la cartouche rigide qui pourra être amenée à frotter contre les parois du siphon, le clapet étant ainsi préservé de toute dégradation par frottement.

La charnière souple permet de changer le clapet de position tout en préservant sa durée de vie. En effet, une charnière souple est plus résistante et moins soumises aux efforts (notamment de frottements) que les charnières classiques comprenant au moins une pièce mâle et une pièce femelle emboitées. Le bloc anti-retour présente alors une bonne durée de vie dans le temps ce qui lui permet d'assurer un blocage des mauvaises odeurs dans les canalisations de manière pérenne.

Par ailleurs, la charnière souple assure le changement de position du clapet par un mouvement de déroulement. En d'autres termes, la charnière permet le changement de position du clapet grâce à son élasticité, ce qui évite sa fatigue au bénéfice de sa durée de vie.

De plus, la fabrication et la maintenance du bloc anti-retour sont simplifiées. Par ailleurs, la durée de vie du bloc anti-retour est accrue par rapport à un clapet et une charnière dissociés, puisqu'il n'existe pas de frottements entre le clapet et la charnière. En outre, les coûts de fabrication d'un tel clapet monobloc sont réduits tandis que les cadences de fabrication peuvent être augmentées, notamment en réalisant un moulage du clapet monobloc.

Enfin, la manipulation du bloc est simplifiée puisqu'il suffit simplement à un utilisateur ou un installateur de se saisir de la languette de manipulation pour réaliser l'insertion du bloc dans le siphon, ou au contraire, réaliser le retrait du bloc hors du siphon.

Selon un mode de réalisation préférentiel, le clapet comprend une portion de fixation présentant des ergots destinés à se loger dans des lumières de la cartouche.

La solidarisation du clapet sur la cartouche est ainsi simplifiée. De plus, un tel montage est réversible, ce qui permet d'assurer une maintenance efficace du bloc anti-retour.

Avantageusement, la charnière est précontrainte de sorte à contraindre le clapet dans sa position d'obturation en l'absence d'un fluide provenant de la première ouverture.

On s'assure ainsi du blocage des mauvaises odeurs dans les canalisations en l'absence d'eau à évacuer du bac de douche. En effet, lorsqu'il n'y a pas d'eau à évacuer, aucune pression ne s'exerce sur le clapet pour le positionner dans sa position de passage. La précontrainte de la charnière permet donc d'éviter que le clapet ne se bloque en position de passage, ce qui faciliterait alors les remontées de mauvaises odeurs.

Dans ce cas, la précontrainte du clapet est avantageusement assurée par un premier angle mesuré entre une portion de fixation et une portion d'obturation, qui présente une valeur inférieure de 10° par rapport à un deuxième angle mesuré sur
la cartouche entre une face supérieure d'une paroi périphérique et une deuxième face aval présentant la deuxième ouverture.

Grâce à cette valeur de précontrainte, lorsque le clapet est monté sur la cartouche, il est précontraint dans sa position d'obturation de sorte à obturer de manière étanche la deuxième ouverture pour empêcher la remontée des mauvaises odeurs.

Selon un mode préféré de réalisation, la cartouche porte un joint périphérique.

Le joint périphérique permet de réaliser une isolation (on parle également d'étancher dans le domaine du métier) entre la cartouche du bloc et les parois du siphon. Ainsi, les mauvaises odeurs ne peuvent pas circuler et remonter entre le bloc et les parois du siphon. En d'autres termes, lorsque le clapet est dans sa position d'obturation, aucune mauvaise odeur ne peut remonter jusque dans le bac de douche.

Avantageusement, la deuxième ouverture présente un épaulement périphérique dans lequel est reçu le clapet dans sa position d'obturation.

Un tel épaulement permet de parfaire l'étanchéité du bloc anti-retour. Lorsque le clapet est dans sa position d'obturation, il est logé dans l'épaulement, si bien que lors de l'insertion ou du retrait du bloc dans ou hors du siphon, les bords du clapet ne peuvent pas frotter contre les parois du siphon, et donc se dégrader.

Un tel siphon permet de bloquer la remontée de mauvaises odeurs dans le bac de douche. Par ailleurs, un siphon selon l'invention est notamment utilisable dans un bac de douche présentant une faible hauteur.

De plus, l'insertion du bloc anti-retour est facilitée puisqu'il suffit de faire glisser le bloc sur la rampe d'engagement.

De même l'extraction du bloc anti-retour est également facilitée, notamment pour permettre la maintenance du bloc anti-retour et donc augmenter sa durée de vie.

Avantageusement, le corps présente forme en entonnoir pour diriger le fluide vers la cartouche du bloc anti-retour.

L'évacuation de l'eau est ainsi facilitée puisque l'eau est guidée vers le bloc anti-retour.

L'invention a enfin pour objet un bac de douche présentant un trou d'évacuation auquel est raccordé un siphon tel que décrit précédemment.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective de dessus montrant un siphon selon l'invention à l'intérieur duquel est inséré un bloc anti-retour;
- la figure 2 est une vue de côté montrant l'insertion d'un bloc anti-retour dans un siphon selon l'invention;
- la figure 3 est une vue en perspective avant de dessus d'un bloc anti-retour pour bac de douche,
- la figure 4 est une vue en perspective arrière de dessus d'un bloc anti-retour pour bac de douche,
- la figure 5 est une vue en coupe transversale d'un bloc anti-retour pour bac de douche, selon une première forme de réalisation, le bloc étant illustré dans une position de blocage ;
- la figure 6 est une vue de côté d'un bloc anti-retour pour bac de douche, le bloc étant illustré dans une position de passage ;
- la figure 7 est une vue en perspective avant de dessus d'un bloc anti-retour pour bac de douche, selon une deuxième forme de réalisation, le bloc étant illustré dans une position de blocage,
- la figure 8 est une vue éclatée d'un bloc anti-retour pour bac de douche, selon la première forme de réalisation.

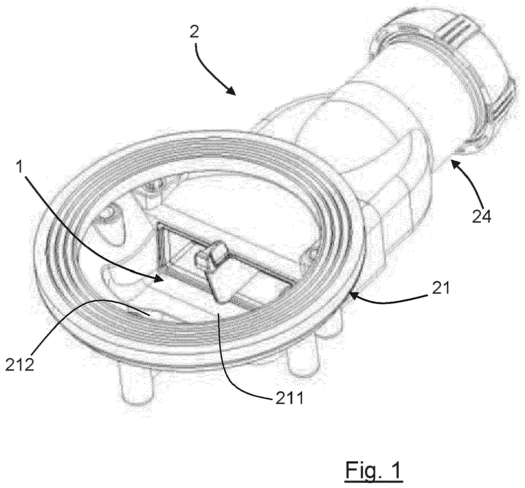

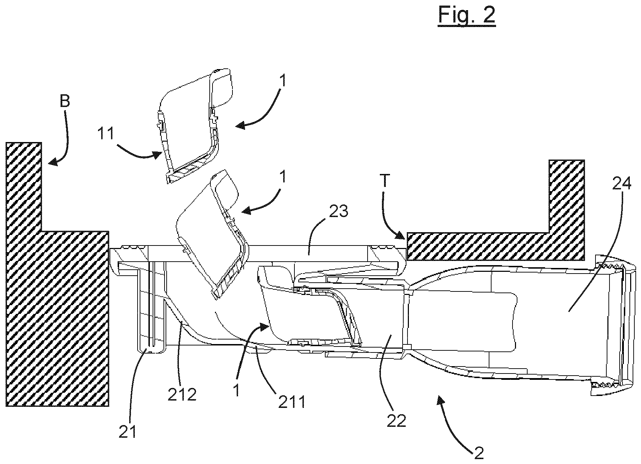

Tel qu'illustré sur les figures 1 et 2, un bloc 1 anti retour selon l'invention est monté dans un siphon 2 d'un équipement sanitaire illustré schématiquement sur la figure 2, tel qu'un bac B de douche présentant un trou T d'évacuation. Le siphon 2 comprend :
- un corps 21 destiné à être logé dans le trou T d'évacuation du bac B de douche ;
- un tube 22 prolongeant le corps 21 jusqu'à une canalisation d'évacuation des eaux usées (non illustrée).

Eventuellement, le siphon 2 peut également comprendre une grille 23 destinée à recouvrir au moins partiellement le corps 21 et à fermer le trou T d'évacuation du bac B de douche tout en autorisant le passage de l'eau pour évacuer l'eau du bac B de douche. Le passage de l'eau peut par exemple être assuré grâce à des perforations ou à un espace ménagé avec le corps 21.

Pour s'adapter à différents diamètres de canalisations, le siphon 2 peut en outre comprendre une interface 24 destinée à être positionnée entre le tube 22 et la canalisation.

En référence à la figure 1, le corps 21 du siphon présente une rampe 211 d'engagement permettant, comme expliqué ci-après, l'insertion du bloc 1 anti-retour.

En outre, le corps 21 présente une forme 212 d'entonnoir débouchant sur la rampe 211 d'engagement et permettant un guidage de l'eau à évacuer vers le bloc 1 anti-retour et donc vers la canalisation.

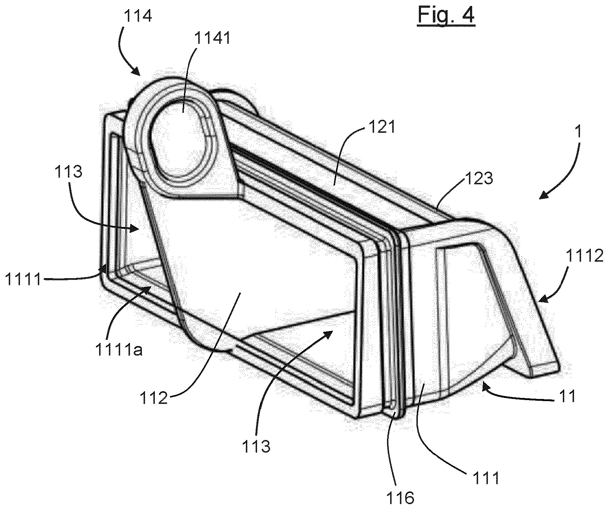

En référence aux figures 2 à 8, le bloc 1 anti-retour selon l'invention comprend :
- une cartouche 11 destinée à être insérée dans le tube 22 du siphon 2 ;
- un clapet 12 monté en rotation sur la cartouche 11 entre :
- une position d'obturation dans laquelle il l'empêche un passage fluidique depuis le bac de douche vers la canalisation ;
- une position de passage dans laquelle il autorise le passage fluidique depuis le bac de douche vers la canalisation.

La cartouche 11 est une cartouche rigide, par exemple réalisée dans un matériau thermoplastique.

La cartouche 11 présente une paroi périphérique 111 présentant :
- une première face 1111 amont définissant une première ouverture 1111a, et
- une deuxième face 1112 aval, opposée à la première face 1111 amont, et définissant une deuxième ouverture 1112a.

Lorsque la cartouche 11 est montée dans le siphon 2, le passage fluidique au travers de la cartouche 11, se fait depuis la première ouverture 1111a vers la deuxième ouverture 1112a.

La cartouche 11 présente une cloison 112 centrale s'étendant entre la première ouverture 1111a et la deuxième ouverture 1112a et définissant avec la paroi 111 périphérique deux conduits fluidiques 113 distincts.

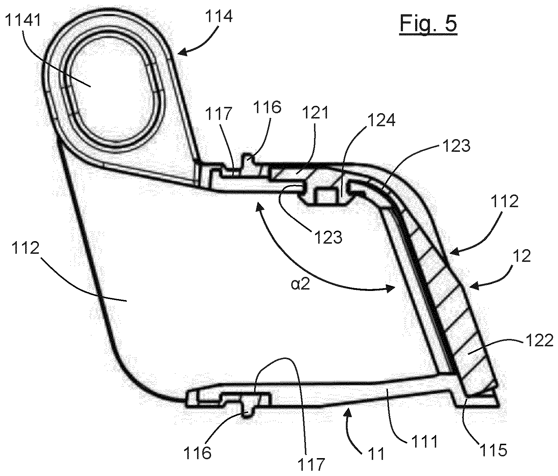

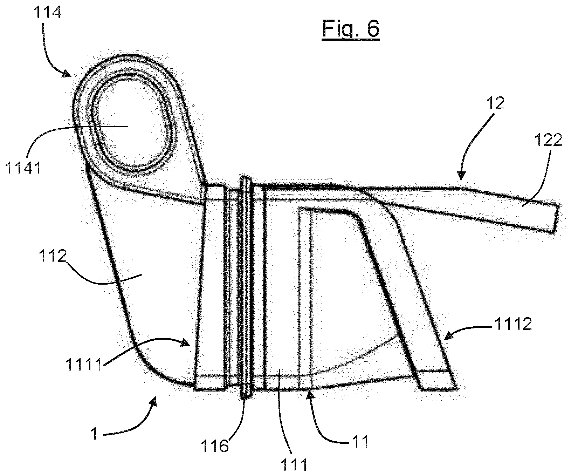

Tel qu'illustré sur les figures 5 et 6, la cloison 112 centrale s'étend en saillie de la cartouche 11 selon son axe d'extension.

La cloison 112 centrale présente une partie supérieure faisant saillie de la cartouche 11 et formant une languette 114 de manipulation. La languette 114 de manipulation présente de part et d'autre de la cloison 112 centrale deux évidements 1141 pour permettre la préhension par un utilisateur ou installateur.

Tel qu'expliqué ci-après, cette languette 114 de manipulation permet de faciliter l'insertion et le retrait de la cartouche dans ou hors du siphon 2.

En référence à la figure 5, la deuxième face 1112 aval présente, au niveau de la deuxième 1112a ouverture, un épaulement 115 périphérique dans lequel est reçu le clapet 12 dans sa position d'obturation. Cet épaulement 115 permet notamment de réaliser une bonne étanchéité fluidique lorsque le clapet 12 est dans sa position d'obturation, empêchant ainsi tout passage fluidique depuis la deuxième ouverture 1112a vers la première ouverture 1111a.

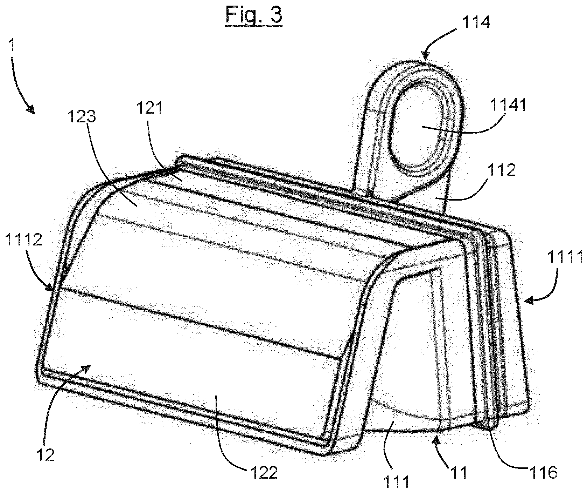

Tel qu'illustré sur les figures 3 à 8, le bloc 1 anti-retour comprend également un joint 116 périphérique. Plus précisément, la cartouche 11 présente une rainure 117 périphérique à l'intérieur de laquelle vient se loger le joint 116 périphérique.

Le joint 116 périphérique fait alors saillie radialement à l'extérieur de la cartouche 11 de sorte à former une excroissance, ou une lèvre, destinée à venir au contact des parois du tube 22 comme expliqué ci-après.

Sur les figures 3, 4 et 5, le clapet 12 est représenté dans sa position d'obturation tandis que sur la figure 6, le clapet 12 est représenté dans sa position de passage.

Pour permettre au clapet 12 d'adopter sa position de passage ou sa position d'obturation, celui-ci présente :
- une portion 121 de fixation par laquelle le clapet 12 est raccroché à la cartouche 11 ;
- une portion 122 d'obturation destinée à venir obturer la deuxième ouverture 1112a en se logeant dans l'épaulement 115 périphérique de la cartouche 11 ;
- une charnière 123 reliant la portion 121 de fixation à la portion 122 d'obturation.

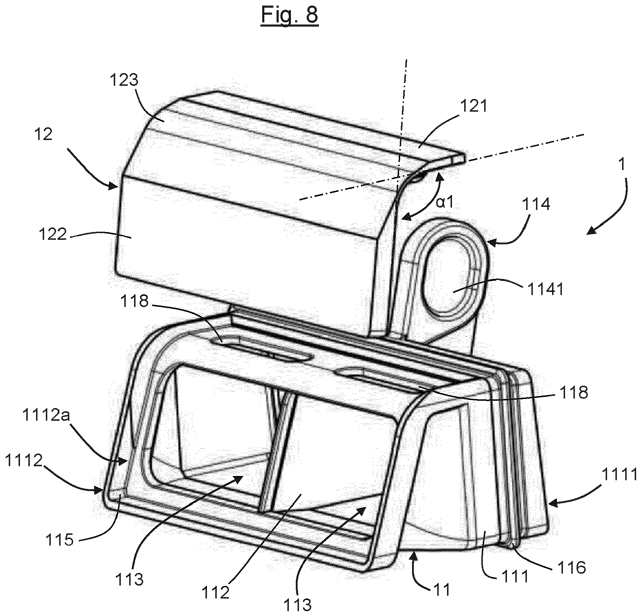

De préférence, le clapet 12 est réalisé dans un matériau souple tel que par exemple un élastomère, et présente une forme au repos sensiblement coudé, c'est-à-dire que la portion 121 de fixation et la portion 122 d'obturation forment entres elles un premier angle α1 non nul (figure 8).

De préférence le premier angle α1, formé entre la portion 121 de fixation et la portion 122 d'obturation, présente une valeur inférieure de 10° par rapport à un deuxième angle α2 mesuré sur la cartouche 11 entre une face supérieure de la paroi périphérique 111 et la deuxième face 1112 aval (figure 5).

Ainsi, lorsque le clapet 12 est monté sur la cartouche 11, la position naturelle qu'il adopte est sa position d'obturation de la deuxième ouverture 1112a. En d'autres termes, lorsque le clapet 12 est monté sur la cartouche 11, il est précontraint dans sa position d'obturation de sorte à venir se loger dans l'épaulement 115 périphérique pour empêcher la remontée des mauvaises odeurs. La valeur de la précontrainte est donc de 10°, grâce au premier angle α1 du clapet 12 qui est inférieur de 10° par rapport au deuxième angle α2 de la cartouche 11.

Tel que représenté sur les figures 5, 7 et 8, le clapet 12 présente, dans sa portion 121 de fixation, au moins un ergot 124, et plus précisément deux ergots 124 destinés à venir se loger dans des lumières 118 pratiquées sur la paroi 111 périphérique de la cartouche 11 rigide. Plus précisément, les deux lumières 118 de la cartouche 11 rigide sont pratiquées sur une partie de la paroi supérieure de la cartouche 11 de part et d'autre de la cloison 112 centrale. Avantageusement, les ergots 124 et les lumières 118 présentent une forme oblongue de sorte à couvrir une surface s'étendant entre la cloison 112 centrale et les parois latérales de la cartouche 11 rigide.

En outre, la portion 122 d'obturation du clapet 12 peut présenter des rainures ou des saillies formant des renforts de rigidification pour éviter notamment que la portion 122 d'obturation ne vrille, ce qui pourrait réduite sa capacité à bloquer les remontées des mauvaises odeurs. En effet, les efforts exercés par un air provenant de la canalisation peuvent tendre à décoller de la cartouche 11 les angles de la portion 122 d'obturation. Dès lors, l'obturation de la deuxième ouverture 1112a n'est plus assurée et les mauvaises odeurs peuvent remonter. La présence des rainures ou saillies sur la portion 122 d'obturation permet de limiter voire supprimer cet effet de déformation dû aux efforts de l'air provenant de la canalisation.

Selon une première forme de réalisation illustrée sur les figures 5 et 8, le clapet 12 est indépendant de la cartouche 11 et est assemblé sur celle-ci par insertion des ergots 124 à l'intérieur des lumières 118 de la cartouche 11.

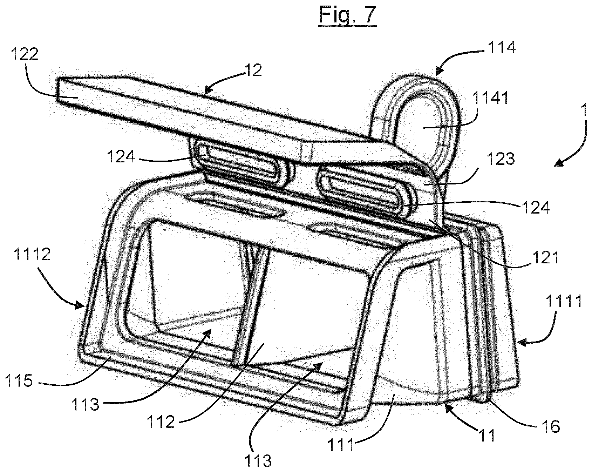

Selon un second mode de réalisation illustré sur la figure 7, le clapet 12 est monobloc avec une partie de la cartouche 11, par exemple le joint 116 périphérique.

En outre, le clapet 12 pourrait être rapporté de manière indémontable sur la cartouche 11 par exemple par surmoulage.

L'insertion du bloc 1 anti-retour dans un siphon 2 se fait de la manière suivante.

L'utilisateur (ou installateur) saisit la languette 114 de manipulation puis insère la deuxième face 1112 aval du bloc 1 anti-retour dans le siphon 2, notamment en faisant glisser le bord inférieur de la deuxième face 1112 aval sur la rampe 211 d'engagement.

L'utilisateur continue son mouvement jusqu'à ce que la cartouche 11, et notamment la partie inférieure de la cartouche 11, glisse complètement sur la rampe 211 d'engagement, et jusqu'à ce que le bloc 1 anti-retour soit inséré dans le tube 22 du siphon 2. Lorsque le bloc 1 anti-retour est inséré dans le siphon 2, le joint 116 périphérique est alors comprimé entre la paroi périphérique 111 de la cartouche et les cloisons du tube 22.

Cela permet ainsi une bonne étanchéité de sorte que ni l'eau évacuée hors du bac de douche, ni un air porteur de mauvaises odeurs et provenant des canalisations ne puissent circuler entre le bloc 1 anti-retour et les parois du tube 22.

Le retrait du bloc 1 anti-retour, notamment pour des opérations de maintenance ou de nettoyage, se fait par préhension de la languette 114 de manipulation puis réalisation d'un effort de traction du bloc 1 anti-retour le long de la rampe 211 d'engagement.

Une fois nettoyé, le bloc 1 anti-retour peut être réinstallé dans le siphon 2 comme expliqué précédemment.

En utilisation, lorsque l'eau doit être évacuée du bac de douche, l'eau traverse le trou d'évacuation du bac de douche puis se dirige vers le corps 21 du siphon 2 empruntant la forme d'entonnoir 212 pour être guidée jusqu'au bloc 1 anti-retour.

Lorsque l'eau atteint le bloc 1 anti-retour, elle traverse les conduits 113 fluidiques jusqu'à atteindre le clapet 12.

La force exercée par l'eau pousse le clapet 12 dans sa position de passage et permet une évacuation de l'eau au travers du tube 22 vers la canalisation.

Lorsque toute l'eau s'est évacuée du bac de douche, le clapet 12 recouvre sa position d'obturation dans laquelle la portion 122 d'obturation est logée dans l'épaulement 115 périphérique de la cartouche 11 rigide. Le clapet 12 recouvre sa position d'obturation grâce notamment à sa forme ainsi qu'à sa charnière 123, et particulièrement à l'angle entre la portion 121 de fixation et la portion 122 d'obturation.

Ainsi, l'air porteur de mauvaises odeurs remontant depuis des canalisations vers le bac de douche est bloqué par le clapet 12 et ne peut remonter jusque dans le bac de douche par le siphon 2.

En outre, la cloison 112 centrale permet de retenir par exemple les cheveux longs de sorte à éviter l'encrassement des canalisations et la formation des bouchons dû à cet encrassement.

Toutefois, la présence de cheveux longs s'étendant au travers de la deuxième ouverture 1112a peut, à terme, gêner voire empêcher le clapet 12 de recouvrer sa position d'obturation de manière efficace. Il en résulte alors que de l'air porteur de mauvaises odeurs peut s'écouler entre le clapet 12 et la cartouche 11 rigide pour atteindre la première ouverture 1111a et donc se répandre dans le bac de douche et dans la salle d'eau ou la salle de bains.

Pour éviter cela, la facilité de montage et de démontage du bloc 1 anti-retour dans le siphon, notamment par la préhension de la languette 114 de manipulation, permet de retirer le bloc 1 anti-retour pour pouvoir retirer manuellement les cheveux coincés de part et d'autre de la cloison 112 centrale. Lorsque l'opération de nettoyage est terminée il suffit simplement de replacer le bloc 1 anti-retour dans le siphon 2 pour que la remontée de mauvaises odeurs soit interrompue.

Parmi les avantages du bloc 1 anti-retour et du siphon précédemment décrits, on peut citer les suivants.

Premièrement, la simplicité de conception du bloc 1 anti-retour permet une réalisation des pièces indépendamment ou communément les unes des autres de manière simple et rapide.

Deuxièmement, la forme du clapet 12, et notamment sa précontrainte, permet qu'en l'absence de pression exercée par l'eau, le clapet 12 recouvre sa position d'obturation empêchant la remontée des mauvaises odeurs.

Troisièmement, la présence du joint 116 périphérique sur la périphérie extérieure de la cartouche 11, permet d'empêcher également la remontée des mauvaises odeurs mais également l'encrassement autour de la cartouche 11, c'est-à-dire entre la cartouche 11 et les parois du tube 22, de sorte à conserver une insertion et surtout un retrait aisé de la cartouche 11 hors du siphon 2.

Quatrièmement, la forme 212 en entonnoir et la rampe 211 d'engagement du corps 21 du siphon 2 permettent à la fois un engagement simple et un retrait rapide du bloc 1 anti-retour mais également un bon guidage de l'eau pour faciliter l'écoulement de l'eau et l'évacuation de l'eau hors du bac de douche.

## Revendications

1. Siphon (2) pour bac de douche, comprenant :
- un corps (21) destiné à être logé dans un trou d'évacuation d'un bac de douche ;
- un tube (22) prolongeant le corps (21) jusqu'à une canalisation ;
- un bloc (1) anti-retour monté dans le tube (22), comprenant :
- une cartouche (11) rigide insérée dans le tube (22), la cartouche (11) présentant une première ouverture (1111a) tournée vers le corps (21) et une deuxième ouverture (1112a) opposée à la première ouverture (1111a) ;
- un clapet (12) présentant une portion (121) de fixation et une portion (122) d'obturation, le clapet (12) étant monté à rotation sur la cartouche (11) entre :
- une position d'obturation dans laquelle la portion (122) d'obturation obture la deuxième ouverture (1112a) pour empêcher un passage fluidique depuis la deuxième ouverture (1112a) vers la première ouverture (1111a), et
- une position de passage dans laquelle la portion (122) d'obturation est écartée de la deuxième ouverture (1112a) pour autoriser le passage fluidique depuis la première ouverture (1111a) vers la deuxième ouverture (1112a),
le clapet (12) étant formé monobloc dans un matériau souple et intégrant une charnière (123) souple entre la portion (121) de fixation et la portion (122) d'obturation pour permettre le passage du clapet (12) de sa position de passage à sa position d'obturation, ladite charnière (123) étant précontrainte de sorte à contraindre le clapet (12) dans sa position d'obturation en l'absence d'un fluide provenant de la première ouverture (1111a),
**caractérisé en ce que** le corps (21) présente une rampe (211) d'engagement de la cartouche (11) du bloc (1) anti-retour dans le tube (22), et **en ce que** la cartouche (11) présente une languette (114) de manipulation pour faciliter l'insertion du bloc (1) dans le siphon (2) de bac de douche.

2. Siphon (2) selon la revendication précédente, **caractérisé en ce que** le corps (21) présente une forme (212) en entonnoir pour diriger le fluide vers la cartouche (11) du bloc (1) anti-retour.

3. Siphon (2) selon l'une quelconque des revendications précédentes, **caractérisé en ce que** la portion (121) de fixation présente des ergots (124) destinés à se loger dans des lumières (118) de la cartouche (11).

4. Siphon (2) selon l'une quelconque des revendications précédentes, **caractérisé en ce que** la précontrainte du clapet (12) est assurée par un premier angle (α1) mesuré entre la portion (121) de fixation et une portion (122) d'obturation, lorsque le clapet (12) est dissocié de la cartouche (11), qui présente une valeur inférieure de 10° par rapport à un deuxième angle (α2) mesuré sur la cartouche (11) entre une face supérieure d'une paroi périphérique (111) et une deuxième face (1112) aval présentant la deuxième ouverture (1112a).

5. Siphon (2) selon l'une quelconque des revendications précédentes, **caractérisé en ce que** la cartouche (11) porte un joint (116) périphérique.

6. Siphon (2) selon l'une quelconque des revendications précédentes, **caractérisé en ce que** la deuxième ouverture (1112a) présente un épaulement (115) périphérique dans lequel est reçu le clapet (12) dans sa position d'obturation.

7. Bac de douche (B) présentant un trou d'évacuation auquel est raccordé un siphon (2) selon l'une quelconque des revendications précédentes.

## Patentansprüche

1. Siphon (2) für Duschwannen, das Folgendes umfasst:
- einen Körper (21), der dazu bestimmt ist, in einem Abflussloch einer Duschwanne untergebracht zu werden;
- ein Rohr (22), das den Körper (21) bis zu einer Kanalisation verlängert;
- einen Rückschlagblock (1), der im Rohr (22) montiert ist und Folgendes umfasst:
- eine feste Kartusche (11), die in das Rohr (22) eingesetzt ist, wobei die Kartusche (11) eine erste Öffnung (1111a) aufweist, die dem Körper (21) zugewandt ist, und eine zweite Öffnung (1112a), die der ersten Öffnung (1111a) gegenüberliegt;
- ein Ventil (12), das einen Befestigungsabschnitt (121) und einen Verschlussabschnitt (122) aufweist, wobei das Ventil (12) drehbar an der Kartusche (11) montiert ist zwischen:
- einer Verschlussposition, in der der Verschlussabschnitt (122) die zweite Öffnung (1112a) verschließt, um einen Fluiddurchgang von der zweiten Öffnung (1112a) zur ersten Öffnung (1111a) zu verhindern, und
- einer Durchgangsposition, in der der Verschlussabschnitt (122) von der zweiten Öffnung (1112a) wegbewegt ist, um einen Fluiddurchgang von der ersten Öffnung (1111a) zur zweiten Öffnung (1112a) zu ermöglichen,
wobei das Ventil (12) einstückig aus einem flexiblen Material ausgebildet ist und ein flexibles Scharnier (123) zwischen dem Befestigungsabschnitt (121) und dem Verschlussabschnitt (122) eingebaut ist, um den Durchgang des Ventils (12) von seiner Durchgangsposition in seine Verschlussposition zu ermöglichen, wobei das Scharnier (123) derart vorgespannt ist, um das Ventil (12) in seiner Verschlussposition einzuschränken, wenn keine Flüssigkeit aus der ersten Öffnung (1111a) austritt,
**dadurch gekennzeichnet, dass** der Körper (21) eine Eingriffsrampe (211) für die Kartusche (11) des Rückschlagblocks (1) im Rohr (22) aufweist, und dadurch, dass die Kartusche (11) eine Handhabungszunge (114) aufweist, um das Einführen des Blocks (1) im Siphon (2) der Duschwanne zu erleichtern.

2. Siphon (2) nach dem vorhergehenden Anspruch, **dadurch gekennzeichnet, dass** der Körper (21) eine Trichterform (212) aufweist, um die Flüssigkeit in Richtung der Kartusche (11) des Blocks (1) zu leiten.

3. Siphon (2) nach einem der vorhergehenden Ansprüche, **dadurch gekennzeichnet, dass** der Befestigungsabschnitt (121) Vorsprünge (124) aufweist, die dazu bestimmt sind, in den Schlitzen (118) der Kartusche (11) untergebracht zu werden.

4. Siphon (2) nach einem der vorhergehenden Ansprüche, **dadurch gekennzeichnet, dass** das Vorspannen des Ventils (12) durch einen ersten Winkel (α1) gewährleistet wird, der zwischen dem Befestigungsabschnitt (121) und einem Verschlussabschnitt (122) gemessen wird, wenn das Ventil (12) von der Kartusche (11) getrennt ist, und der einen Wert aufweist, der 10° kleiner ist im Vergleich zu einem zweiten Winkel (α2), der an der Kartusche (11) zwischen einer Oberseite einer Umfangswand (111) und einer zweiten Rückseite (1112), die die zweite Öffnung (1112a) aufweist, gemessen wird.

5. Siphon (2) nach einem der vorhergehenden Ansprüche, **dadurch gekennzeichnet, dass** die Kartusche (11) eine umlaufende Dichtung (116) trägt.

6. Siphon (2) nach einem der vorhergehenden Ansprüche, **dadurch gekennzeichnet, dass** die zweite Öffnung (1112a) eine umlaufende Schulter (115) aufweist, in der das Ventil (12) in seiner Verschlussposition aufgenommen ist.

7. Duschwanne (B), das ein Abflussloch aufweist, an das ein Siphon (2) nach einem der vorhergehenden Ansprüche angeschlossen ist.

## Claims

1. A siphon (2) for a shower tray, comprising:
- a body (21) intended to be accommodated in a drain hole of a shower tray;
- a tube (22) extending the main body (21) up to a pipe;
- a non-return block (1) mounted in the tube (22), comprising:
- a rigid cartridge (11) inserted into the tube (22), the cartridge (11) having a first opening (1111a) directed towards the body (21) and a second opening (1112a) opposite to the first opening (1111a);
- a flap valve (12) with a fastening portion (121) and a sealing portion (122), the flap valve (12) being mounted movable in rotation on the cartridge (11) between:
- a sealing position in which the sealing portion (122) closes off the second opening (1112a) to prevent a fluid passage from the second opening (1112a) towards the first opening (1111a), and
- a passing position in which the sealing portion (122) is cleared from the second opening (1112a) to enable a fluid passage from the first opening (1111a) towards the second opening (1112a),
the flap valve (12) being made in one-piece of a flexible material and integrating a flexible hinge (123) between the fastening portion (121) and the sealing portion (122) to enable toggling of flap valve (12) from its passing position into its sealing position, said hinge (123) being prestressed so as to urge the flap valve (12) in its sealing position in the absence of a fluid originating from the first opening (1111a),
**characterised in that** the body (21) has a ramp (211) for fitting the cartridge (11) of the non-return block (1) into the tube (22), and **in that** the cartridge (11) has a handling tab (114) to facilitate the insertion of the block (1) into the shower tray siphon (2).

2. The siphon (2) according to the preceding claim, **characterised in that** the body (21) has a funnel-like shape (212) to direct the fluid towards the cartridge (11) of the non-return block (1).

3. The siphon (2) according to any one of the preceding claims, **characterised in that** the fastening portion (121) has lugs (124) intended to be accommodated in apertures (118) of the cartridge (11).

4. The siphon (2) according to any one of the preceding claims, **characterised in that** the prestress of the flap valve (12) is ensured by a first angle (α1) measured between the fastening portion (121) and a sealing portion (122), when the flap valve (12) is separate from the cartridge (11), which has a value smaller by 10° than a second angle (α2) measured on the cartridge (11) between an upper face of a peripheral wall (111) and a downstream second face (1112) with the second opening (1112a).

5. The siphon (2) according to any one of the preceding claims, **characterised in that** the cartridge (11) carries provided a peripheral gasket (116).

6. The siphon (2) according to any one of the preceding claims, **characterised in that** the second opening (1112a) has a peripheral shoulder (115) in which the flap valve (12) is received in its sealing position.

7. A shower tray (B) having a drain hole to which a siphon (2) according to any one of the preceding claims is connected.
